# EUROPÄISCHE PATENTSCHRIFT

(11) **EP 0 523 459 B1**
(45) Veröffentlichungstag und Bekanntmachung des Hinweises auf die Patenterteilung: **24.01.1996**
(21) Anmeldenummer: 92111216.5
(22) Anmeldetag: 02.07.1992
(51) Int. Cl.: F25B 19/00

(54) **Verfahren zur Kühlung metallischer Flächen**
Method for cooling metallic surfaces
Procédé à refroidir des surfaces métalliques

(30) Priorität: 18.07.1991 DE 4123886
(43) Veröffentlichungstag der Anmeldung: 20.01.1993
(73) Patentinhaber: Linde Aktiengesellschaft, D-65189 Wiesbaden (DE)
(72) Erfinder: Dürr, Dieter, Dipl.-Ing. (FH), W-8130 Starnberg (DE)
(74) Vertreter: Schaefer, Gerhard, Dr.

(56) Entgegenhaltungen:
- WO-A-90/03341
- DE-B- 1 083 839
- PATENT ABSTRACTS OF JAPAN vol. 007, no. 063 (M-200) 16. März 1983 & JP-A-57 207 736 (KOGYO GIJUTSUIN)

## Beschreibung

Die Erfindung betrifft ein Verfahren zur Kühlung und Schmierung von metallischen Flächen, insbesondere von Scherenmessern bei der Glasherstellung, unter Verwendung tiefsiedender Substanzen.

Zur Kühlung von metallischen Flächen ist es bekannt, diese mit Wasser oder verflüssigtem Stickstoff als Kältemittel zu besprühen oder zu bespritzen.

Beispielsweise bei der Glasherstellung werden die Scherenmesser, die die aus einem Speiser austretende heiße Glasmasse in Tropfen schneiden, mit einer Suspension aus Wasser und Öl oder mit verflüssigtem Stickstoff und einem Schmiermittel abgekühlt und gleichzeitig geschmiert (WO-90/03341). Die Glasmasse weist dabei Temperaturen von über 1200°C auf, die Scherenmesser sollen hingegen eine Temperatur von etwa 400°C nicht überschreiten. Aufgrund der hohen thermischen Belastung sowie der Reibung der Scheren aneinander und an der Glasmasse sind die dünnen Schneiden der Scherenmesser hoher Abnutzung ausgesetzt.

Nachteilig wirkt sich bei den bekannten Verfahren das sog. Leidenfrost-Phänomen auf die Effektivität der Kühlung und Schmierung der metallischen Flächen aus.

Das im Vergleich zu den aufgeheizten metallischen Flächen sehr viel kältere flüssige Kältemittel verdampft sofort beim Kontakt mit der heißen Fläche und bildet in dieser Grenzschicht eine die Wärmeübertragung stark beeinträchtigende Dampfschicht. Das flüssige Kälte- und Schmiermittel kann folglich der heißen Oberfläche nicht mehr genügend Wärme entziehen. Außerdem ist der direkte Kontakt zur heißen Oberfläche unterbrochen, so daß auch die Schmierung deutlich verschlechtert wird.

Dies hat beispielsweise für die Scherenmesser in der Glasherstellung erheblich verkürzte Lebenszeiten zur Folge.

Um diese Nachteile zu umgehen, wird das flüssige Kälte- und Schmiermittel mit hohem Druck in großer Menge auf die abzukühlenden Flächen aufgebracht. Dies wiederum hat naturgemäß einen hohen Verbrauch und damit höhere Kosten sowie eine starke Verschmutzung und Belastung der Umgebung mit Rückständen dieser Kälte- und Schmiermittel zur Folge.

Zur Verminderung der Auswirkungen des Leidenfrost-Phänomens wird in der JP-A-57 207 736 vorgeschlagen, aus einer von einer auf Hochspannung liegenden Ringelektrode umgebenen Öffnung austretende Kühl- und Schmierflüssigkeit (Wasser, Öl) tropfenweise auf eine heiße, geerdete Oberfläche aufzubringen.

Aufgabe der vorliegenden Erfindung ist es nunmehr, ein Verfahren zur Kühlung und Schmierung metallischer Flächen zu entwickeln, das die obengenannten Nachteile vermeidet und sich kostengünstig realisieren läßt. Insbesondere in Anlagen zur Glasherstellung soll dieses Verfahren einsetzbar sein.

Die Aufgabe wird erfindungsgemäß dadurch gelöst, daß durch Anlegen einer elektrischen Spannung an die metallischen Flächen ein elektrisches Feld erzeugt wird, und daß Kohlendioxid in fester Form als Trockenschnee in dieses Feld eingebracht und derart auf die Flächen als Kühl- und Schmiermittel aufgebracht wird.

Das erfindungsgemäße Verfahren stellt eine ausreichende Kühlung der heißen metallischen Flächen sicher, indem es die Haftung des Kühlmittels auf der Oberfläche des abzukühlenden Gegenstandes vergrößert. Als Kühlmittel wird Kohlendioxid in fester Form verwendet. Die metallische, elektrisch leitende abzukühlende Fläche wird vorzugsweise an den einen Pol einer Spannungsquelle angeschlossen und in geeignetem Abstand ihr gegenüber wird die Gegenelektrode angebracht. Das Einschalten der Spannungsquelle erzeugt ein elektrisches Feld, in das erfindungsgemäß der Trockenschnee in Richtung der zu kühlenden Oberfläche eingebracht wird.

Die Moleküle einer kühlenden Substanz können beispielsweise ein permanentes Dipolmoment besitzen. Die Dipole werden dann im elektrischen Feld ausgerichtet und bei Kontakt mit der abzukühlenden, elektrisch geladenen Fläche wirken elektrische Anziehungskräfte, die die Haftung des Kühlmittels auf der metallischen Fläche erhöhen. Auch nicht polare tiefsiedende Substanzen wie Kohlendioxid können Verwendung finden. In diesem Fall werden durch das äußere elektrische Feld Dipolmomente induziert, deren Größe von der Polarisierbarkeit der Moleküle und der elektrischen Feldstärke abhängt. Schließlich können je nach verwendeter Substanz ab einem bestimmten Wert der elektrischen Feldstärke lonisierungen der Moleküle der tiefsiedenden Substanz auftreten. Die lonen werden dann direkt auf die zu kühlende, geladene Fläche hin beschleunigt.

Die bei Anwendung des erfindungsgemäßen Verfahrens resultierende erhöhte Haftung des Trockenschnees auf der heißen, metallischen Fläche macht neben dem verbesserten Wärmeübergang von der heißen Fläche auf den Trockenschnee zudem den Verzicht auf ein zusätzliches Schmiermittel wie etwa Öl möglich.

Damit werden Kosten zur Bereitstellung der bisher üblichen Kälte- und Schmiermittel eingespart.

Der Trockenschnee wird erfindungsgemäß in das elektrische Feld eingeblasen und auf der zu kühlenden Fläche abgeschieden. Die elektrischen Kräfte bewirken eine starke Polarisation der Moleküle, eine Ausrichtung der Moleküle im Feld und eine Anziehung beim Auftreffen auf die heiße Fläche. Durch Besprühen der heißen metallischen Fläche mit Trockenschnee wird diese nach Sublimation des festen Kohlendioxids ständig mit neuem Trockenschnee bedeckt. Der Einsatz von Kohlendioxid-Schnee, der rückstandsfrei sublimiert, hat den Vorteil, daß die Umgebung der zu kühlenden metallischen Flächen, beispielsweise eine Glasherstellungsanlage, völlig sauber ohne Rückstände an bisher eingesetztem Kälte- und Schmiermittel gehalten werden kann. Das aus der Umgebung abgezogene gasförmige Kohlendioxid kann nach entsprechender Reinigung und Kompression wiederverwendet werden.

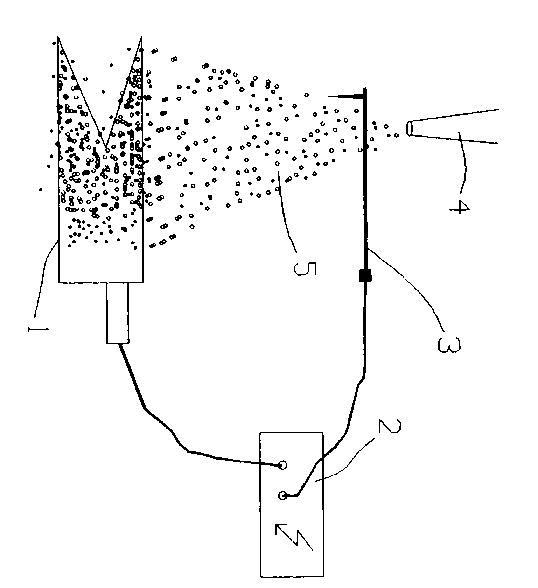

Anhand der einzigen Figur soll das erfindungsgemäße Verfahren näher erläutert werden.

In einer Anlage zur Herstellung von Glasflaschen werden Scherenmesser 1 zum Abschneiden einzelner Glastropfen bestimmter Größe von einem Strang aus erhitztem zähflüssigem Glas verwendet. Diese Glastropfen werden mit den bekannten Preß-Blas- oder Blas-Blas-Verfahren zum Endprodukt geformt.

Bisher wird beispielsweise ein Ölfilm als Schmiermittel und anschließend verflüssigter Stickstoff als Kältemittel auf die Scherenmesser 1 aufgebracht, um die Belastung durch Wärme und Reibung zu mindern. Der Leidenfrost-Effekt bewirkt hierbei jedoch ein schlagartiges Verdampfen des flüssigen Stickstoffs mit der Folge, daß der flüssige Stickstoff durch das entstandene Dampfpolster von der heißen Fläche der Scherenmesser 1 abgedrängt wird und in die Umgebung spritzt.

Erfindungsgemäß wird jedes der beiden metallischen Scherenmesser 1 über einen elektrischen Anschluß mit dem Pol einer Spannungsquelle 2 verbunden und jedem Scherenmesser gegenüber eine Gegenelektrode 3 angebracht, die mit dem anderen Pol dieser Spannungsquelle 3 verbunden ist.

In bekannter Weise wird durch Entspannung flüssigen Kohlendioxids Trockenschnee 5 erzeugt, der aus der Düse 4 austritt, die auf die abzukühlenden Scherenmesser 1 weist. Der Trockenschnee 5 fällt im elektrischen Feld auf die Scherenmesser 1 und bleibt an diesen haften. Nach Sublimation des festen Kohlendioxids aufgrund der aufgenommenen Wärmemenge wird dieser sogleich von neuem Trockenschnee 5 ersetzt.

Selbstverständlich kann auch die Düse 4, aus der der Trockenschnee 5 austritt, selbst als Gegenelektrode 3 verwendet werden, indem die elektrisch leitende Düse 4 mit dem Gegenpol der Spannungsquelle 2 verbunden wird.

Die zwischen dem Scherenmesser 1 und der Gegenelektrode 3 herrschende Spannung beträgt etwa 10 bis 20 kV pro Zentimeter ihres Abstandes. Die jeweiligen Spannungswerte müssen an den erwünschten Grad der Haftung des Trockenschnees 5 an den Scherenmessern 1 angepaßt werden und sollten den von der Luftfeuchtigkeit abhängenden Wert der Durchlagsspannung nicht erreichen.

Beim Abschalten der Spannungsquelle 2 während des Besprühens der Scherenmesser 1 mit CO₂-Schnee entweicht dieser sofort von der Oberfläche der Scherenmesser 1 in alle Richtungen.

Das erfindungsgemäße Verfahren beseitigt die bei der bisherigen Scherenmesserschmierung und -kühlung auftretenden Probleme und vereint die Kühlung und Schmierung der Scherenmesser 1 durch die erhöhte Haftung des Kühlmittels auf den abzukühlenden Flächen.

## Patentansprüche

1. Verfahren zur Kühlung und Schmierung von metallischen Flächen (1), insbesondere von Scherenmessern (1) bei der Glasherstellung, unter Verwendung tiefsiedender Substanzen, **dadurch gekennzeichnet**, daß durch Anlegen einer elektrischen Spannung an die metallischen Flächen (1) ein elektrisches Feld erzeugt wird, und daß Kohlendioxid in fester Form als Trockenschnee (5) in dieses Feld eingebracht und derart auf die Flächen (1) als Kühl- und Schmiermittel aufgebracht wird.

2. Verfahren nach Anspruch 1, **dadurch gekennzeichnet**, daß gegenüber einer metallischen Fläche (1) eine Gegenelektrode (3) angebracht wird und die metallische Fläche (1) und die Gegenelektrode (3) mit den beiden Polen einer Spannungsquelle (2) verbunden werden.

3. Verfahren nach Anspruch 2, **dadurch gekennzeichnet**, daß eine Düse (4), aus der der Trockenschnee (5) austritt, als Gegenelektrode (3) verwendet wird.

## Claims

1. Process for cooling and lubricating metal surfaces (1), in particular of shear blades (1) in the manufacture of glass, using substances with a low boiling point, characterised in that an electrical field is generated by applying an electrical voltage to the metal surfaces (1), and in that carbon dioxide is introduced into this field in solid form as dry snow (5) and applied in this form to the surfaces (1) as cooling and lubricating medium.

2. Process according to claim 1, characterised in that a counter electrode (3) is located facing a metal surface (1) and the metal surface (1) and the counter electrode (3) are connected with the two poles of a voltage source (2).

3. Process according to claim 2, characterised in that a nozzle (4), from which the dry snow (5) emerges, is used as the counter electrode (3).

## Revendications

1. Procédé pour refroidir et lubrifier des surfaces métalliques (1), en particulier des lames de cisailles (1) pour la fabrication du verre, en utilisant des substances à bas point d'ébullition, caractérisé en ce que, par application d'une tension aux surfaces métalliques (1), on crée un champ électrique, et l'on introduit dans ce champ du dioxyde de carbone solide, sous forme de neige carbonique (5), et on dépose cette neige carbonique sur les surfaces (1), de telle façon qu'elle serve dc moyen de réfrigération et de lubrification.

2. Procédé selon la revendication 1, caractérisé en ce que l'on dispose une contre-électrode (3) en face d'une surface métallique (1), et l'on relie la surface métallique (1) et la contre-électrode (3) aux deux pales d'une source de tension (2).

3. Procédé selon la revendication 1, caractérisé en ce que l'on utilise, comme contre-électrode (3), une tuyère (4) d'où sort la neige carbonique (5).
